# EUROPEAN PATENT SPECIFICATION

(11) **EP 2 934 037 B1**
(45) Date of publication and mention of the grant of the patent: **13.04.2016**
(21) Application number: 14001377.2
(22) Date of filing: 15.04.2014
(51) Int. Cl.: H04W 24/08, H04W 24/02

(54) **Technique for Evaluation of a Parameter Adjustment in a Mobile Communications Network**
Technik zur Auswertung einer Parametereinstellung in einem mobilen Kommunikationsnetz
Technique pour l'évaluation d'un paramètre d'ajustement dans un réseau de communication mobile

(43) Date of publication of application: 21.10.2015
(73) Proprietor: Telefonaktiebolaget LM Ericsson (publ), 164 83 Stockholm (SE)
(72) Inventor: Vaderna, Peter, 1174 Budapest (HU); Reider, Norbert, H-9111 Tényö (HU)
(74) Representative: von Zmuda-Trzebiatowski, Margarethe

(56) References cited:
- EP-A2- 1 868 320
- WO-A1-2013/030429
- US-A1- 2006 083 170
- US-A1- 2012 188 880
- US-A1- 2012 295 609

## Description

### Technical Field

The present disclosure generally relates to managing performance of a mobile communications network. In particular, the present disclosure relates to an evaluation of the effects of a parameter adjustment on a performance metric. The technique may be embodied in one or more of methods, computer programs, and devices.

### Background

In a mobile communications network, functions called Network Management System (NMS) or Operations Support System (OSS) are responsible for performance management. Performance is usually measured on the basis of a performance metric, such as Key Performance Indicators (KPIs). The NMS/OSS measures, collects and analyzes KPIs in the network. The KPI analysis helps to localize performance problems and may also be used to identify possibilities for network optimization.

When performance degradation occurs, it is necessary for the operator to find out the main cause of the problem (root cause analysis) in order to be able to initiate an appropriate action. Similarly, when the operator would like to increase the level of service provided to its customers or network efficiency, the operator needs to determine the main bottlenecks for achieving higher performance levels and invest in removing those main bottlenecks.

Efficiency and service quality in mobile communications networks are influenced by a large number of parameters. For example, throughput is influenced by the radio channel quality of a given user terminal but also depends on the number of other active user terminals in the cell, the traffic of those user terminals, Internet side bandwidth, delays and server limitations, just to name a few.

As will be appreciated, optimizing the mobile communications network is an important task that may be used to increase network efficiency and service quality at the same time. Due to the inter-dependence between individual parameters that influence a given performance metric, a parameter adjustment with respect to one network entity, such as a radio cell, may influence the operation of other network elements, such as neighboring radio cells. This fact renders network optimization a complex task.

Similarly, a performance degradation seen in the mobile communications network may have a number of reasons. In some cases low performance can immediately be attributed to severe network incidents (e.g., cell outage) visible directly from a fault management system. In other cases, however, the decrease in performance cannot be easily explained. For example, there may be no direct connection to any severe network problems or incidents. In particular, there are many parameters in the network that can have direct or indirect impact on performance. These parameters might depend on each other. Thus, it is not trivial to find the cause of the performance problems due to the multivariate dependence of the performance on the parameters and the complicated inter-dependence between the parameters.

Various approaches have been proposed to identify network performance problems and possibilities for network optimization. In this regard, WO 98/53621 A2 suggests collecting measurements in a mobile communications network and using the collected measurements as input to a heuristic-based approach. The approach evaluates the effects of a parameter adjustment in the mobile communications network by initially performing an incremental parameter adjustment and then iteratively repeating the steps of collecting measurements and performing further incremental parameter adjustments.

It has been found that the approach taught in WO98/53621 A2 performs a parameter adjustment without direct evaluation of the expected impact before the adjustment is actually implemented. One consequence of this approach is the fact that only incremental adjustments are safe to be implemented in each iteration, followed by a new round of collecting measurements and evaluating same before the next adjustment step can be made (or the previous adjustment step can be corrected). This approach makes any parameter optimization process rather slow in convergence. Moreover, a simple heuristic cannot reliably predict the inter-dependence between multiple parameters and multiple parameter adjustments.

Document US 2006/083170 A1 may be construed to disclose a method and apparatus for simulating a modification to or expansion of a communications network and for determining whether the simulated modified or expanded network meets cost criteria. First logic forecasts an increase in network traffic. Second logic simulates a modification to or expansion of the network based on the forecasted increase in network traffic and/or based on performance improvement criteria and/or based on coverage expansion criteria. Third logic determines whether the simulated modified or expanded network meets cost criteria.

Document EP 1 868 320 A2 may be construed to disclose a management system and method for a wireless communication network and an associated interface. The management system provides a structure of data layers and a visualization design to upgrade the efficiency of network management. The management system includes a data generation module and a display module. The data module generates a plurality of data layers, which comprise at least a map layer, a network configuration layer, and an operation index layer. The network configuration layer comprises a configuration of the wireless communication network on the map layer. The operation index layer includes statistic values of an operation index of the wireless communication network under the configuration. The display module performs an overlap display of a plurality of selected layers from the data layers to show operation status of the wireless communication network.

Document US 2012/188880 A1 may be construed to disclose methods of dynamically modeling performance of a communications network that may include modeling a communications network using a processor by performing a link budget analysis (LBA) for a configuration of the communications network, receiving a plurality of layers of real-time information about the communications network, iteratively performing additional LBAs using one or more of the layers of real-time information from among the plurality of layers of real-time information, multi-dimensionally co-modeling a matrix comprising results of the iteratively performed additional LBAs, and determining one or more final communications network configuration parameters based on the multi-dimensionally co-modeled matrix.

### Summary

There is a need for a technique of evaluating a parameter adjustment in a mobile communications network, wherein the technique avoids one or more of the drawbacks discussed above, or other, related problems.

According to the invention, there are provided a method and an apparatus according to the independent claims. Developments are set forth in the dependent claims.

According to a first aspect, a method of evaluating a parameter adjustment in a mobile communications network using a multivariate performance model is presented, wherein the mobile communications network comprises multiple network entities and wherein the multivariate performance model is configured to model a dependency of a performance metric for the mobile communications network on at least two parameters, wherein a parameter is selected to be adjusted for a first network entity, and a second network entity is potentially affected by the parameter adjustment for the first network entity. The method comprises determining, using the multivariate performance model, a change of the performance metric for the first network entity, that results from the parameter adjustment. The method also comprises determining, using the multivariate performance model, a change of the performance metric for the second network entity, that results from the parameter adjustment for the first network entity. Still further, the method comprises evaluating the parameter adjustment based on the performance metric changes for the first network entity and the second network entity.

The method may further comprise selecting the parameter that is to be adjusted. Also, the first network entity for which the selected parameter is to be adjusted may be selected. After those two selection steps, one or more second network entities potentially affected by adjustment of the selected parameter for the selected first network entity may be determined.

The first and second network entities may belong to a radio access domain of the mobile communications network. As an example, the first and second network entities may be selected from the group comprising radio carriers, radio cells, radio base stations, and radio network controllers.

The multivariate performance model is configured to model a dependency of the performance metric on a first parameter and at least one second parameter. The dependency may be modelled based on a respective distribution of the first parameter and the at least one second parameter. There may exist an inter-dependence between the first parameter and the at least one second parameter. This inter-dependence may extend across the individual network entities. As an example, an adjustment of the first parameter for the first network entity may potentially result in a change of the at least one second parameter for the second network entity.

In one variant, the performance metric change for the first network entity may be determined based on the adjustment of the first parameter. As an example, for the first network entity the influence of the adjustment of the first parameter on the performance metric may be modelled. This can be done by changing the distribution of the first parameter in the model responsive to the parameter adjustment and calculating the resulting performance metric change for the first network entity. Additionally, or as an alternative, the performance metric change for the second network entity may be determined based on the change of the at least one second parameter for the at least one second network entity, that results from the adjustment of the first parameter. This can be done by changing in the model the distribution of the second parameter responsive to the parameter adjustment and calculating the resulting performance metric for the second network entity.

The first parameter and the second parameter may be selected from the parameter set comprising signal strength, interference, network load, load of the first network entity, load of the second network entity, and type of user terminal served by the network entities. Of course, the parameter set may comprise additional parameters, including parameters directly impacted by or impacting the listed parameters.

The parameter adjustment may be evaluated in various ways. As an example, the performance metric changes for the first network entity and the (least one) second network entity may be aggregated and the aggregated performance metric changes may be assessed. The process of aggregating the performance metric changes may include summing up the performance metric changes for the first network entity and for the one or more second network entities. Alternatively, or in addition, a statistical parameter (e.g., an average or distribution) may result from aggregating the performance metric changes.

The parameter adjustment may be repeatedly evaluated for different combinations of network entities. As such, the method may comprise determining a new first network entity in the mobile communications network for which the selected parameter is to be adjusted, and determining a new second network entity potentially affected by the parameter adjustment for the new first network entity. Then a change of the performance metric for the new first network entity that results from the parameter adjustment may be determined using the multivariate performance model. Further, a change of the performance metric for the new second network entity, that results from the parameter adjustment for the new first network entity may be determined using the multivariate performance model. Further, the parameter adjustment may be evaluated based on the performance metric changes for the new first network entity and the new second network entity.

In one variant, the (previous) second network entity is determined as the new first network entity. Moreover, the (previous) first network entity may become the new second network entity. In case the mobile communications network comprises a set of three or more network entities, each network entity of that set may become a first network entity, and for that particular first network entity an individual determination of one or more second network entities potentially affected by the parameter adjustment for that particular first network entity may be determined.

In case a parameter adjustment is evaluated from the perspective of two or more different first network entities, the network entity with the highest optimization potential may be identified from the parameter adjustment evaluations. To this end, results of the parameter adjustment evaluations may be ordered in accordance with the associated (optionally aggregated) performance metric changes.

The multivariate performance model may model a dependency of the performance metric on distributions of the at least two parameters. In such a case, the parameter adjustment may be modelled by changing the distribution of the selected parameter in the multivariate performance model. As an example, the parameter adjustment may be modelled by replacing the distribution of the selected parameter in the multivariate performance model with a distribution of the selected parameter that has been measured or estimated. Alternatively, the parameter adjustment may be modelled by shifting the distribution of the selected parameter in the multivariate performance model by a predefined offset value.

The multivariate performance model may be based on measurements of at least one of the at least two parameters. Of course, also all parameters may be acquired by measurements. In certain implementations, at least one of the at least two parameters may be obtained by a registry look-up operation (e.g., in a Home Location Register, HLR).

The method may also comprise generating the multivariate performance model. Generating the multivariate performance model may comprise receiving performance metric values, first parameter values and second parameters values. A particular performance metric value may be associated with the first and second parameter values that were prevailing when the particular performance metric value was acquired (e.g., measured or looked-up). Each parameter may be categorized in at least two non-overlapping sets of parameter values, wherein different combinations of a first parameter value set and a second parameter value set (e.g., in the form of permutations) can be defined. Generating the multivariate performance model may further comprise identifying groups of performance metric values for which the received first and second parameter values match the first and second parameter value sets of an individual combination. The multivariate performance model may then be generated from the identified groups of performance metric values.

The individual parameter value sets and parameter value set combinations may each be defined by bins. A particular parameter value set may be given by a range of continuous or discontinuous numerical values. The range may be open on one side. Ranges given for the same parameter may be equidistant or not. In another variant, a particular parameter value set is defined by a non-numerical value, for example an operating system type or a terminal type associated with a particular user terminal.

The method may also comprise acquiring the performance metric values and the first and second parameter values. The acquisition may be performed by measurements, registry look-ups, or otherwise. In particular, the performance metric values may be measured. The acquisitions may be performed by the same network entity (e.g., network node) that also performs the methods and method aspects disclosed herein, or by another network component.

In one variant, a particular performance metric value and the associated first and second parameter values are acquired such that a dependency of the particular performance metric value on the first and second parameters will be captured. As an example, these values may be measured or derived otherwise substantially at the same point in time and combined in a single data set. As such, the step of receiving the performance metric values, the first parameter values and the second parameter values may comprise receiving multiple such data sets.

Performance metric statistics may be generated by processing the performance metric values on a group-by-group basis. As an example, the performance metric values of a particular group may be processed, optionally together with a group size metric of the particular group. Generally, the performance metric values may be processed by determining one or more of a distribution, an average, a histogram, a percentile, and a similar measure of the performance metric values of each group. Based on the performance metric statistics the multivariate performance model may be derived, which reflects the dependency of the performance metric statistics on the first parameter and the second parameter in more general terms.

Also provided is a computer program product comprising program code portions for performing the steps of any of the methods described herein. The computer program product may be stored on a computer-readable recording medium (e.g., a CD-ROM, DVD or semiconductor memory), or may be provided for download via a computer network (e.g., the Internet or a proprietary network).

Also provided is a device for evaluating a parameter adjustment in a mobile communications network using a multivariate performance model. The mobile communications network comprises multiple network entities and the multivariate performance model is configured to model a dependency of a performance metric of the mobile communications network on at least two parameters, wherein a parameter is selected to be adjusted for a first network entity, and a second network entity is potentially affected by the parameter adjustment for the first network entity. The device is configured to determine, using the multivariate performance model, a change of the performance metric for the first network entity, that results from the parameter adjustment. The device is further configured to determine, using the multivariate performance model, a change of the performance metric for the second network entity, that results from the parameter adjustment for the first network entity. Still further, the device is configured to evaluate the parameter adjustment based on the performance metric changes for the first network entity and the second network entity.

The device may furthermore be configured to perform any of the method aspects and method steps disclosed herein.

Further provided is a network management system comprising the device. As understood herein, an operations support system could also be referred to as network management system.

The device described herein may be installed on one or more nodes of a network management system or operations support system for the mobile communications network. The mobile communications network may be a cellular or non-cellular network. Moreover, one or more of the apparatuses may be configured to acquire the values of interest, for example by measurements or retrieval from a local or remote registry.

### Brief Description of the Drawings

Embodiments of the technique presented herein are described herein below with reference to the accompanying drawings, in which:
- Fig. 1: shows a network management solution in a mobile communications network in accordance with an aspect of this disclosure;
- Fig. 2: shows a device in accordance with an aspect of this disclosure;
- Fig. 3: shows a flow chart of a method in accordance with an aspect of this disclosure;
- Fig. 4A: shows a data structure for multi-dimensional binning of performance metric values and parameter values in accordance with an aspect of this disclosure;
- Fig. 4B: shows a model creation process in accordance with an aspect of this disclosure;
- Fig. 5A: shows a dependency of a throughput-oriented performance metric on lower level parameters;
- Fig. 5B: illustrates multi-dimensional binning for the throughput-oriented performance metric of Fig. 5A;
- Fig. 5C: shows a breakdown of the throughput-oriented performance metric of Fig. 5B for an individual parameter;
- Fig. 6A: shows a first example of a performance model expressed as average performance metric values of individual bins;
- Fig. 6B: shows a second example of a performance model expressed as a multi-dimensional distribution of bins;
- Fig. 7: shows a flow chart of another method in accordance with an aspect of this disclosure;
- Fig. 8: shows a flow chart of a further method in accordance with an aspect of this disclosure;
- Fig. 9: is a diagram illustrating optimization potential in connection with the conflicting parameters radio coverage and interference;
- Fig. 10: shows a flow chart of a still further method in accordance with an aspect of this disclosure; and
- Fig. 11: is a diagram illustrating optimization potential for increasing and decreasing the received signal reference power per cell.

### Detailed Description

In the following description, for purposes of explanation and not limitation, specific details are set forth (such as particular network functions, processes and signalling steps) in order to provide a thorough understanding of the technique presented herein. It will be apparent to one skilled in the art that the present technique may be practiced in other embodiments that depart from these specific details.

For example, the embodiments will partially be described in the context of Long Term Evolution (LTE) or LTE-Advanced (LTE-A) mobile communications technologies; however, this does not rule out the use of the present technique in connection with additional or alternative mobile communication technologies such as the Global System for Mobile Communications (GSM). While the following embodiments will partially be described with respect to certain Technical Specifications (TSs) of the Third Generation Partnership Project (3GPP), it will be appreciated that the present disclosure could also be realized in connection with different Performance Management (PM) specifications.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP), a Field Programmable Gate Array (FPGA) or general purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein.

With the development of new technologies in mobile communications networks, Operation and Management (O&M) of said technologies has to meet new challenges. The increasing complexity of the successive generations of mobile communications systems requires more detailed O&M functionality. As an example, in legacy Radio Access Network (RAN) Management Systems (MSs), such as for GSM, the MSs have limited O&M functionality and provide only low resolution data, whereas in LTE, for the RAN MSs, a large number of various kinds of high resolution data are provided to log events, keep track of operation status and localize potential problems.

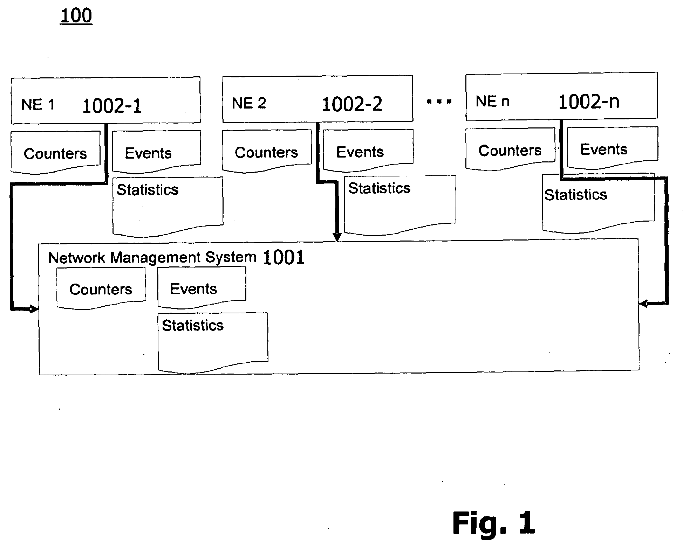

Fig. 1 illustrates a mobile communications network 100 in which the Performance Management (PM) aspects presented herein can be implemented. Such aspects include, *interalia,* the generation of a multivariate performance model as well as the evaluation of optimization potential in the mobile communications network 100 using the model.

The mobile communications network 100 may in one exemplary realization substantially conform to 3GPP TS 32.401 V11.0.0 (see, e.g., Section 4 and others). 3GPP provides particular performance measurement definitions, e.g., for GSM and later mobile communications networks. According to 3GPP, the generation of the performance measurement results may be performed either by aggregating and calculating statistical information of events or by exposing internal variables. The performance measurement types can be classified into categories as defined, e.g., in TS 32.401 V11.0.0 (Section 4.2.2).

In the following description of the mobile communications network 100, 3GPP terminology will be used. It will be appreciated that this terminology is not intended to limit the following description, and the present disclosure as a whole, to any specific communications standard.

As shown in Fig. 1, the mobile communications network 100 comprises a Network Management System (NMS) 1001 and multiple Network Elements (NEs) 1002-1, 1002-2,... , 1002-n (also generally referred to as network entities herein) attached to the NMS 1001. The NEs 1002-1, 1002-2,... , 1002-n are not restricted to one network entity type or one network domain. Rather, they can be of multiple network entity types from multiple domains of the mobile communications network 100 (e.g., an evolved NodeB (eNB) from RAN, a Multimedia Management Entity (MME), a Serving Gateway (S-GW) of the Core Network (CN), etc.). The NEs 1002-1, 1002-2,..., 1002-n may be realized as or co-located with Deep Packet Inspection (DPI) probe modules listening on standard interfaces between the NEs 1002-1, 1002-2,... , 1002-n for data acquisition.

Each of the NEs 1002-1, 1002-2,... , 1002-n is configured for data acquisition for use in connection with the present disclosure. The data acquisition results, sometimes also referred to as events herein, may be one or more of logged, counted via counters, and reported to the NMS 1001. Events may contain low-level, high-granularity information obtained from the NEs 1002-1, 1002-2,..., 1002-n. Example fields (sometimes also referred to as "parameters") in an event record from the event log may be a timestamp, user ID, cell/node ID, event-related parameters, result codes, etc.

The data acquisitions performed by the NEs 1002-1, 1002-2,... , 1002-n are reported to the NMS 1001. There are basically two types of reporting, one resides in (typically periodic) reports of counters, and the other one is event reporting. The NMS 1001 may aggregate the received reports. The NMS 1001 may additionally, or as an alternative, perform logging and counting on its own, for example by probing the NEs 1002-1, 1002-2,... , 1002-n.

Performance management by the NMS 1001 (or by an Operation Support System, OSS, not shown in Fig. 1) provides tools for generating long-term statistics, time-series analysis and trend analysis. This may be achieved by regularly collecting counters reported by the NEs 1002-1, 1002-2,... , 1002-n at the end of a pre-defined granularity period, also called Result Output Period (ROP), with a typical length of 15 minutes. The counters collected in ROPs on a minute timescale provide a possibility to generate long-term statistics for the acquired parameters separately. PM may also be based on more detailed logs such as event logs to keep track of the operations on a finer timescale (such as seconds, milliseconds). The event logs can be used for troubleshooting and more detailed analysis. It is also possible to collect event logs from various sources (e.g., from the multiple NEs 1002-1, 1002-2,... , 1002-n) in the network and combine (e.g., correlate) them, thus providing an end-to-end (E2E) PM functionality (such as an E2E fault localization or E2E optimization).

The events, such as KPIs, collected from the different NEs 1002-1, 1002-2,... , 1002-n depend on a large number of parameters. This fact enables an operator to determine dependencies between KPIs and other network parameters, and further facilitates root cause analysis of performance degradation and network optimization tasks. It should be noted that an individual KPI may have a double-role in that it may constitute in some cases a performance metric itself and a parameter for another performance metric in other cases.

It has been found that the existing performance measurement and reporting strategies, such as periodic reports and event logging, do not always satisfy O&M needs. For example, periodic reports in certain implementations hide the details of performance problems, while event logging is cumbersome in terms of storage and processing resources when performed over an extended period of time (e.g., months or years). Moreover, any analytical model that tries to characterize the parameter-dependency of a performance metric in a purely mathematical way based on theoretical knowledge inherently suffers from inaccuracy (i.e., not matching with situations in real networks) and incompleteness (i.e., can take into account only a limited set of parameters and is unable to consider hidden relations between parameters). Also, there are parameters, typically non-numerical parameters (e.g., terminal type), that are difficult or even impossible to consider in a formalized mathematical way.

One approach presented by this disclosure is a statistics, modelling and optimization framework in which sets of associated performance metric values and prevailing values of multiple parameters are substantially collected at the same time by at least one of the NMS 1001 and the NEs 1002-1, 1002-2,..., 1002-n (see Fig. 1). In one realization, a data aggregation is provided, wherein the amount of data is reduced compared to detailed event logs but dependencies between the performance metric and the parameters are still preserved. The preserved dependencies can be exploited for generating performance metric statistics that may again be used for modelling purposes. The modelling, in turn, can be exploited for root cause analysis (e.g., to determine performance bottlenecks) and network optimization (e.g., to evaluate the effects of parameter adjustments).

In more detail, a multivariate performance model for each individual performance metric is created such that the dependency of the performance metric on an underlying set of parameters is captured by the model. The model is in one variant continuously built and updated based on network measurements. The model reflects a multi-dimensional distribution of the acquired performance metric values in the dimensions of its parameters. When sufficient number of measurements have been acquired (potentially also from different networks), the whole multi-dimensional space can be scanned.

Another solution presented by the present disclosure is related to using the performance model for bottleneck identification and root cause analysis. In order to identify the main bottleneck in a particular cell or in a user connection, the measurement samples of that cell or connection are placed in a multi-dimensional space to establish a dependency model that permits an analysis as to which parameter dimension should be improved in order to achieve the largest improvement in the target performance metric of a particular NE or a particular set of NEs.

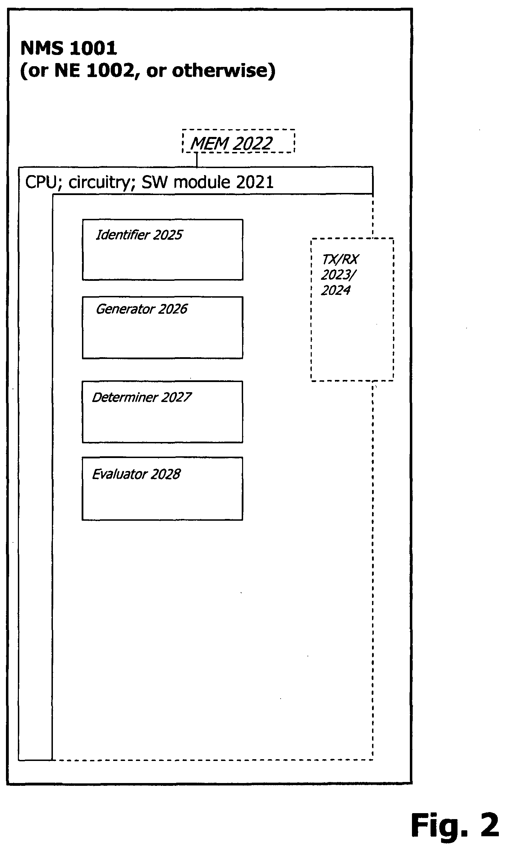

Fig. 2 shows components comprised in an exemplary device realized in the form of the NMS 1001, the NEs 1002-1, 1002-2,... , 1002-n, or otherwise (e.g., distributed over several network entities). For the sake of an easier explanation, the following description of Fig. 2 will exemplarily focus on the NMS 1001.

As shown in Fig. 2, the NMS 1001 comprises a core functionality (e.g., one or more of a Central Processing Unit (CPU), dedicated circuitry and/or a software module) 2021, an optional memory (and/or database) 2022, an optional transmitter 2023 and an optional receiver 2024. It is to be noted that the transmitter 2023 and the receiver 2024 may be provided as an integral transceiver, as indicated in Fig. 2. Moreover, the NMS 1001 comprises an identifier 2025, a generator 2026, a determiner 2027 and an evaluator 2028. In some variants of the NMS 1001 only the determiner 2027 and the evaluator 2028 may be implemented.

As partly indicated by the dashed extensions of the functional block of the CPU 2021, the components 2023 to 2028 may at least partially be functionalities running on the CPU 2021, or may alternatively be separate functional entities or means controlled by the CPU 2021 and supplying the same with information. The transmitter and receiver 2023, 2024 may be realized to comprise suitable hardware and/or software interfaces. The CPU 2021 may be configured, for example, using software residing in the memory 2022, to process various data inputs and to control or execute the functions of the components 2023 to 2028. The memory 2022 may serve for storing program code for carrying out the methods according to the aspects disclosed herein, when executed by the CPU 2021.

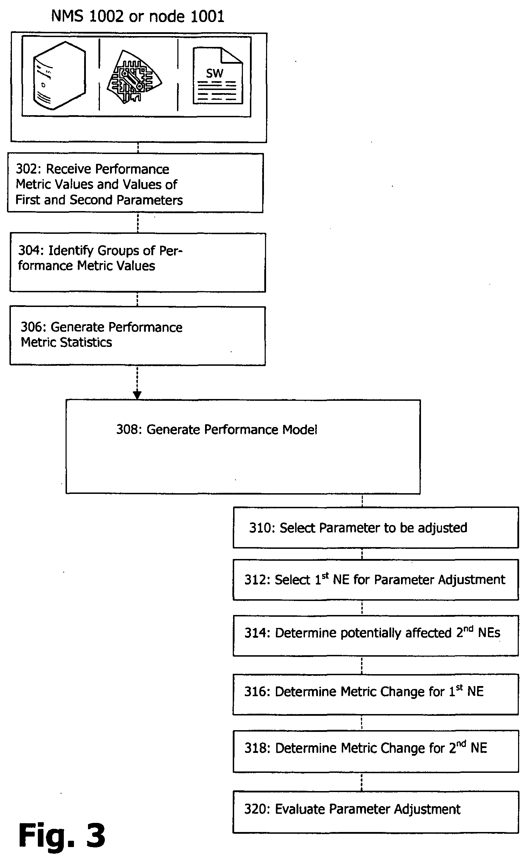

Fig. 3 shows a flow chart of a method for generating a multivariate performance model in accordance with the present disclosure. Fig. 3 also reflects the interaction between the components of the device embodiment illustrated in Fig. 2. In the diagram of Fig. 3, time aspects between method steps are reflected in the vertical arrangement of the step sequence as well as in the step numbers. It is to be noted that the time aspects indicated in Fig. 3 do not necessarily restrict any of the method steps shown to the step sequence outlined in Fig. 3. This applies in particular to method steps that are functionally disjunctive with each other.

The method of Fig. 3 models the dependency of a performance metric of the mobile communications 100 on multiple parameters and exploits the resulting model for evaluating parameter adjustments. The performance metric has a dependency on at least a first parameter and a second parameter. Each of the first parameter and the second parameter has been categorized in two or more non-overlapping sets (e.g., ranges or non-numerical classes) of parameter values. As an example, the first parameter may be categorized in M sets, and the second parameter may be categorized in N sets. Different combinations (or mappings) of a first parameter value set and a second parameter value set are defined. In the exemplary case of M sets for the first parameter values and N sets for the second parameter value, up to M x N different combinations may be defined.

The method comprises in step 302 receiving performance metric values, first parameter values and second parameter values. The values may be received in individual data sets in which a particular performance metric value is associated with the first and second parameters values prevailing when the particular performance metric value was acquired. As such, a dependency of a particular performance metric value from the parameter values may be preserved in a particular data set. The data sets may, for example, be received via an interface integrated in the receiver 2024 of the NMS 1002 of Fig. 2 from event logs of the NEs 1002-1, 1002-2,... , 1002-n of Fig. 1.

The method further comprises in step 304 identifying groups of performance metric values for which the associated first and second parameter values match the first and second parameter value sets of an individual combination. In a first substep, and for each individual parameter value, the particular parameter value set to which the parameter value belongs may be identified. Once the associated first and second parameter value sets have thus been determined, the corresponding combination can be identified in a second substep. Step 304 can be performed by the identifier 2025 of Fig. 2.

Still further, the method comprises in step 306 generating performance metric statistics from the identified groups of performance metric values. Step 306 may comprise a group-wise processing of the individual performance metric values so as to derive a distribution of performance metric values for an individual group, or any other statistics measure. The performance metric statistics of an individual group may have been generated taking into account a group size metric. Step 306 can be performed by the generator 2026 of Fig. 2.

In step 308, the multivariate performance model is generated by the generator 2026 from the performance metric statistics. The performance model is generated to reflect, or model, a dependency of the performance metric from the first and second (and, optionally, further) parameters. As an example, the performance model may describe a dependency of the performance metric from distributions of the first and second parameters. The performance model may itself be indicative of a distribution of the performance metric. As such, there may be provided functions or components in the NMS 1001 for calculating distributions and model generation (not shown in Fig. 2).

Once the multivariate performance model has been generated, it may be exploited for evaluating parameter adjustments in the mobile communications network 100. To this end, in step 310 one of the first parameter and the second parameter is selected for parameter adjustment evaluation. It will be appreciated that in case the multivariate performance model depends on more than two parameters, also any of the further parameters may be selected in step 310.

Further, in step 312, one of the NEs 1002-1, 1002-2, ... 1002-n is selected as a candidate implementing the parameter adjustment (see Fig. 1). As an example, NE 1002-1 may be selected in step 312.

Then, in step 314, one or more further NEs 1002 are selected that are potentially affected by the parameter adjustment for NE 1002-1. As an example, it may be found in step 314 that a parameter adjustment for NE 1002-1 may affect NEs 1002-2 and 1002-3. If, for instance, the NEs 1002 are configured as radio cells, it may be determined that an adjustment of the selected parameter (e.g., an increase in signal strength) for cell 1002-1 may affect neighboring cells 1002-2, 1002-3 in terms of an increased interference level.

In a further step 316, the multivariate performance model generated in step 308 is used to determine a change of the performance metric for NE 1002-1 (as selected in step 312) that results from the parameter adjustment at NE 1002-1.

In step 318, a change of the performance metric for NE 1002-2 and NE 1002-3 (as determined in step 314) is determined using the multivariate performance model. It will be appreciated that the performance metric change determined in step 318 is a result of the parameter adjustment for NE 1002-1. If, for example, it is determined in steps 310 and 312 that the signal strength is to be increased for NE 1002-1, a corresponding performance metric gain for NE 1002-1 can be determined in step 316. At the same time, the interference level for the neighboring NEs 1002-2 and 1002-3 will increase, so that for each of NE 1002-2 and NE 1002-3 a corresponding performance metric decrease is determined in step 318. In step 318, the performance metric change will individually be determined for each of the two neighboring NEs 1002-2 and 1002-3.

For determining the performance metric changes in steps 316 and 318 an intermediate step (not shown in Fig. 3) may in each case be performed. In that intermediate step absolute values for the performance metric may be determined for the NEs 1002 (based on the multivariate performance model) before and after the parameter adjustment. From the absolute performance matric values before and after the parameter adjustment the performance metric changes may then be determined.

In a further step 320, the parameter adjustment is evaluated based on the performance metric changes that were determined for NE 1002-1 on the one hand and its neighboring NEs 1002-2 and 1002-3 on the other hand. In the example explained above, the performance metric gain for NE 1002-1 resulting from an increased signal strength as well as the resulting performance metric decreases for the neighboring NEs 1002-2 and 1002-3 may be aggregated (e.g., summed up), and the aggregated performance metric change may be assessed to determine possible optimization potential.

In order to evaluate the parameter adjustment from the network perspective, rather than from the perspective of the individual NE 1002-1 selected in step 312, steps 312 to 320 may be repeated for some or all of the NEs 1002 in the mobile communications network 100 (e.g., in the above example, by first performing step 316 for NE 1002-2 and step 318 for NEs 1002-1 and 1002-3, and by then performing step 316 for NE 1002-3 and step 318 for NEs 1002-1 and 1002-2). In the end, for each cycle of steps 312 to 318, an individual parameter adjustment evaluation will be obtained, which permits selecting the optimal NE (e.g., in the above example, out of NEs 1002-1, 1002-2 and 1002-3) as the most promising candidate for a particular parameter adjustment.

As will be appreciated, the determining steps 316 and 318 may be performed by the determiner 2027, and the evaluation step 320 may performed by the evaluator 2028 in Fig. 2. Moreover, one or more further components may be provided in the NMS 1001 of Fig. 2 for performing steps 310, 312 and 314.

In the following, more detailed examples for the generation of performance metric statistics and performance models on the one hand and for the evaluation of network parameter adjustments using the resulting performance models on the other hand will be discussed. Those more detailed examples may be implemented in connection with the techniques discussed above. For example, the following examples may be practiced in the network solution illustrated in Fig. 1 and using the general framework as illustrated in Figs. 2 and 3.

### Generation of Performance Metric Statistics and Performance Models

In one aspect of the present disclosure, generation of a multivariate performance model for the performance metric of interest (also called target performance metric hereinafter) comprises the following process:
- Select the target performance metric and the set of parameters, i.e., dimensions, which influence the target performance metric and would thus need to be acquired (e.g., measured or looked up). For example, if the target performance metric is throughput, then the parameters can be channel quality, cell load, terminal type, etc.
- Create (e.g., equally distributed) bins where the acquired samples (e.g., in the form of a data sets) can be placed. The bins are created by dividing each parameter dimension into multiple, non-overlapping (i.e., disjunctive) categories, such as value ranges.
- Perform sample acquisition and place each acquired sample in the associated one of the multi-dimensional bins. Each sample may comprise a performance metric value and the prevailing parameter values. Calculate performance metric statistics for the target performance metric (e.g., the average) from the acquired samples in each bin.
- Generate performance model from the calculated performance metric statistics.

It should be noted that the first two steps could be performed "offline" and based on expert knowledge. The third and fourth steps may then be performed automatically to derive statistics for the target performance metric of interest and an associated model.

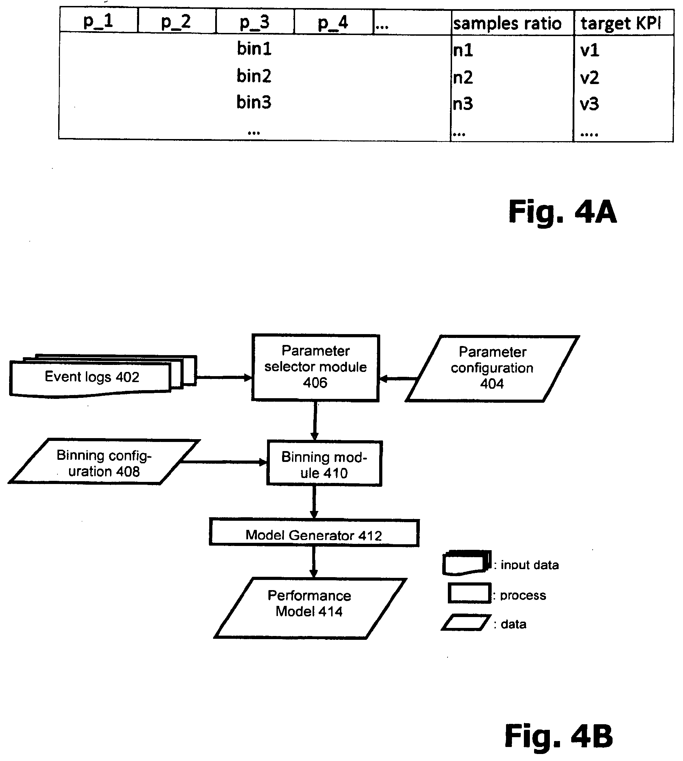

The resulting multi-dimensional bins from the above process may have a generic data structure format as exemplarily illustrated in Fig. 4A. The dimensions (p_1, p_2, p_3, ...) represent the parameter space on which the target performance metric value depends (e.g., radio quality, cell load, etc. in case the target performance metric is throughput). In each dimension the parameter space is divided into a number of categories, or bins (e.g., in p_1, there are bins p_11, p_12, ... p_1M, similarly, in p_2 there are bins p_21, p_22,... p_2N, etc.). Then, in the multi-dimensional space there will be a "combined" bin1 which corresponds to the bin combination of (p_11, p_21, p_31,....) in the single dimensions.

In Fig. 4a, for each combined bin (e.g., bin1) a metric called samples ratio (e.g., n1) is defined that indicates how many of the samples aggregated in the data structure of Fig. 4A actually fall in a particular combined bin. This metric may generally be based on (i.e., derived from) a counter. In the present case the metric thus indicates the size of a sample group that has been placed in the particular combined bin. This "group size metric" may also be indicated in the form of a percentage.

Further, for each combined bin (e.g., bin 1) target performance metric statistics are statistically aggregated (e.g., v1). The aggregation may comprise calculating an average or a distribution of all performance metric values placed in the combined bin. It should be noted that also the individual parameter values may be collected in the data structure of Fig. 4A, either in the form of individual values or in a statistically aggregated form (e.g., as an average or distribution).

For populating the data structure shown in Fig. 4A, samples acquired by measurement or otherwise are collected from the mobile communications network 100 (see, e.g., Fig. 1), where each sample includes one value of the measured target performance metric, e.g., the throughput measured during the last few seconds, and the prevailing parameter values, e.g., radio signal quality, cell load, etc., measured or acquired otherwise substantially at the same time to preserve their inter-dependency. In order to have samples in a format suitable for binning (e.g., different items of information measured at the same time at the same cell, for the same user, etc.), correlation and pre-processing of event logs (e.g., measurement logs) received from the NEs 1002 performing the acquisition (see again Fig. 1) is performed. The different items of information may come from different parts of the network and/or from different information records, etc.

Once the data structure as illustrated in Fig. 4A has been populated with a statistically significant number of samples, the multivariate performance model will be derived therefrom (as will be explained in greater detail below). Creation of the performance model includes analyzing the collected parameters and the statistically aggregated performance metric values (e.g., the performance metric statistics). Typically, not only the performance metric statistics will enter into the performance model, but also the number of samples (e.g., in terms of the multiple-dimensional parameters distribution).

One exemplary implementation derives performance metric statistics and the multivariate performance model from network events (such as compound or correlated events) in event logs as illustrated in Fig. 4B. Based on a specific parameter configuration 404 selected offline for a target performance metric, a parameter selector module 406 automatically retrieves the samples of interest from distributed event logs 402 (e.g., in the NEs 1002 of Fig. 1). The retrieved samples are then binned by a binning module 410. Operation of the binning module 410 is controlled by a binning configuration 408 selected offline. The binning configuration 408 may take the form of a raw (i.e., un-populated) data structure as illustrated in Fig. 4A. The output of the binning module 410 is a populated data structure onto which the samples have been statistically aggregated to generate the performance metric statistics. A generator 412 finally generates the multivariate performance model 414 from the performance metric statistics.

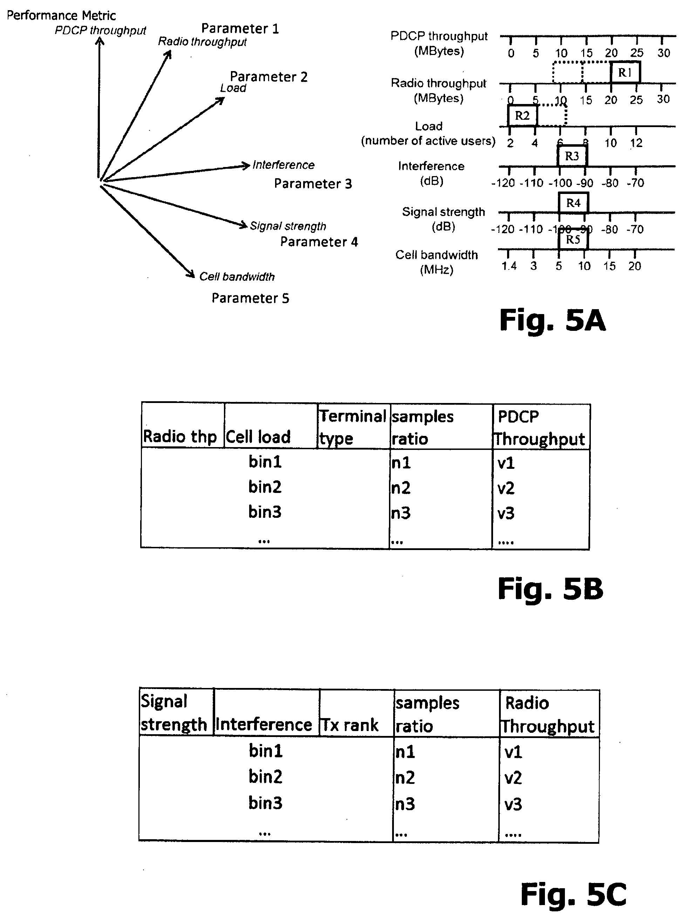

Fig. 5A shows a use case example of performance metrics, the parameters to be selected and associated bins (categories). The exemplary performance metric Packet Data Convergence Protocol (PDCP) throughput depends on parameters such as radio throughput, load, radio signal strength, interference and bandwidth, to name a few. In NMS or OSS solutions, those items of information are logged together with other event parameters in the same data set in an event log (e.g., as shown in Fig. 1). For the purpose of the present example, performance metrics and parameters are regarded to be on the same level. They both may be granulized or otherwise categorized, and an individual multi-dimensional data structure reflecting a particular performance metric statistics (see, e.g., Fig. 4A) may contain a mixture of different parameters on which the performance metric depends. The categorizing, or binning, may be performed so that the bins, or parameter value sets, are not too small to get sufficient numbers of samples in the bins. On the other hand, the bin width should not be too large in order to get relevant statistical relations between the parameters and the performance metric.

As a non-limiting example, a single range, or parameter value set, Rx in each parameter is illustrated in Fig. 5A. For example, a possible combination of parameter value sets Rx, or bins, could be defined as follows:
- 20 to 25 Mbytes radio throughput
- 2 to 4 active users
- -100 to -90 dB interference level
- -100 to -90 dB signal strength level
- 5 to 10 MHz cell bandwidth.

It will be appreciated that in practice multiple parameter value sets will be defined per parameter, so that multiple different value set combinations for different parameters will result.

A simple example for a data structure derived for the exemplary performance metric PDCP throughput is illustrated in Fig. 5B. PDCP throughput is measured at the PDCP layer in an LTE network, which is very close to the TCP level throughput that any user application would perceive. Therefore, it is for many network operators a relevant target performance metric. Exemplary parameter dimensions in Fig. 5B are radio throughput, cell load and terminal type (see also Fig. 5A). Radio throughput is the "raw" link rate the LTE User Equipment (UE) can see when scheduled, i.e., it is highly dependent on the radio quality of the connection (it can be expressed in terms of bps/Hz, also called spectral efficiency of the link).

The PDCP throughput, i.e., what the UE ultimately receives, directly depends on radio throughput and cell load. When the UE has a very good channel (i.e., high radio throughput) but there is a high congestion in the cell, it will receive a low PDCP throughput (due to the fact that it can be scheduled only less frequently in a congested cell). In another case when the UE may have a poor radio link (low radio throughput) but no congestion in the cell, it can be scheduled frequently but due to poor link quality it will at the end receive low PDCP throughput again. There can be, of course, all kinds of mixed cases as well, and the UE type may be considered in addition here.

With the help of the target performance metric statistics derived based on the data structure of Fig. 5B it is possible to judge in a particular situation to what extent each factor limits the PDCP throughput. The performance metric statistics can be further elaborated to deeper levels, e.g., such that the radio throughput further depends on signal strength and interference, etc., see Fig. 5C.

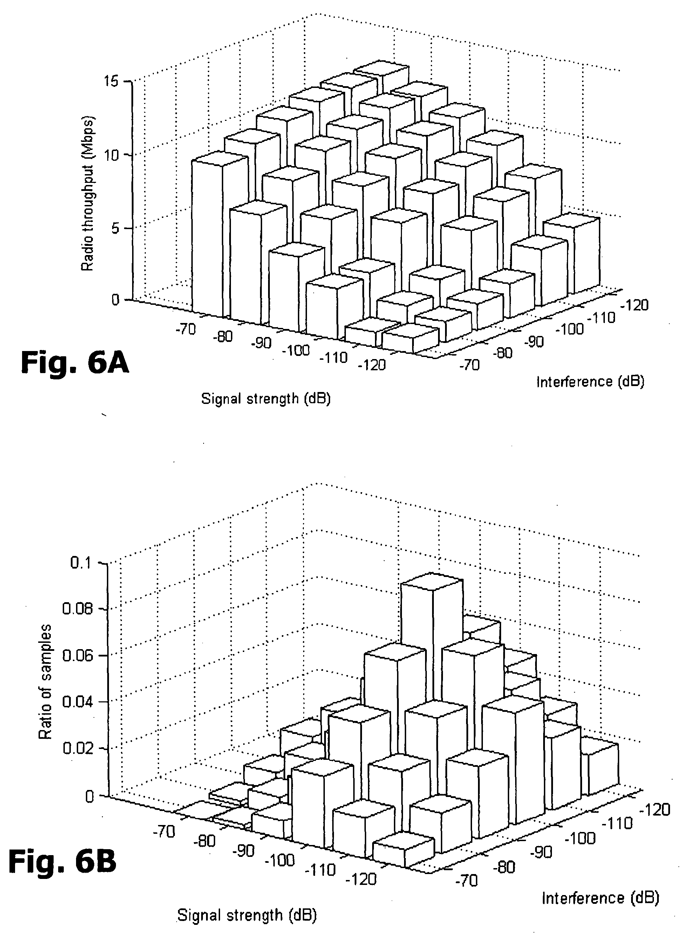

An example of the multi-dimensional distribution of radio throughput versus signal strength and interference is shown in Fig. 6A. The distribution of samples (i.e., samples ratio) for the same model is illustrated in Fig. 6B. Based on the distributions illustrated in Figs. 6A and 6B, the multivariate performance model may be created.

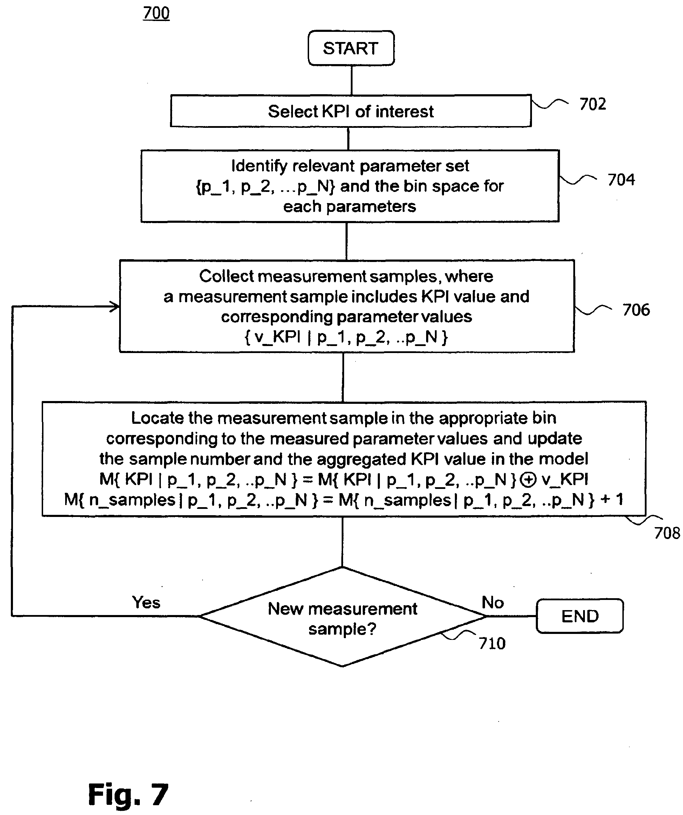

A flow chart 700 of an exemplary data aggregation and model creation approach is illustrated in Fig. 7. In the following, a Key Performance Indicator (KPI) will be regarded as an exemplary target performance metric to be modelled.
- After selecting the target KPI in step 702, the relevant parameter set on which the KPI depends has to be identified in step 704. As said, step 704 may require expert knowledge to derive the direct or indirect dependencies between the selected KPI and relevant parameters and to categorize the parameters properly (see, e.g., Fig. 4B in this regard).
- In a next step 706, measurement samples are collected and correlated in a single data set in order to link a measured target KPI value to the prevailing parameter values.
- Then, in step 708, for each data set the corresponding bin combination is determined and both the associated KPI value and the number of sampies counter is updated (see, e.g., Fig. 4A in this regard). The target KPI values may be statistically aggregated using an arbitrary statistical aggregation function (denoted by circled + sign in Fig. 708) to arrive at the desired KPI statistics. This function can be, for instance, a distribution, a histogram, some percentiles or an average of the KPI values.
- After processing a statistically sufficient number of measurement samples, the data acquisition is finished in step 710. Otherwise the method loops back to step 706. The acquired data already implicitly describe the multivariate performance model.

Formally, the model is defined as the function M, which gives the desired statistics of the target KPI, such as the average value of the KPI, for each given parameter value combination. That is, M{KPI| p_1, p_2, ... p_N}.

The model can be used to obtain the probability distribution function of the target KPI for given distributions of the input parameters (F_p1(x), F_p2(x),...). That is, the probability of P{KPI < T|F_p1(x), F_p2(x),...} is obtained by summing up the probability of those parameter combination values (v1, v2, v3, ...) for which M{KPI| v_1, v_2, ... v_N} < T. The probability of a parameter combination is obtained from the distribution functions of the input parameters. For simplicity, the average value of the KPI is often used as the metric of interest, instead of the distribution of the KPI. The average value of the KPI is obtained as Avg_kpi = E{M{KPI}| F_p1(x), F_p2(x), ...}.

### Evaluation of parameter adjustments using the performance model

In the following, a more detailed example will be presented for evaluating the effects of a parameter adjustment in the mobile communications network 100 of Fig. 1. As will be seen, the evaluation can be performed in a realistic and practical way as it will be based on a multivariate performance model that is based on the acquisition of "live" data. Such a model may thus overcome the drawbacks of purely heuristics-based analytical models. In particular, the effects of a parameter adjustment in one NE can be predicted accurately and will also take into account resulting effects of the parameter adjustment for other NEs. As such, the overall performance gain (or decrease) over multiple NEs 1002 can be evaluated taking into account any parameter inter-dependence.

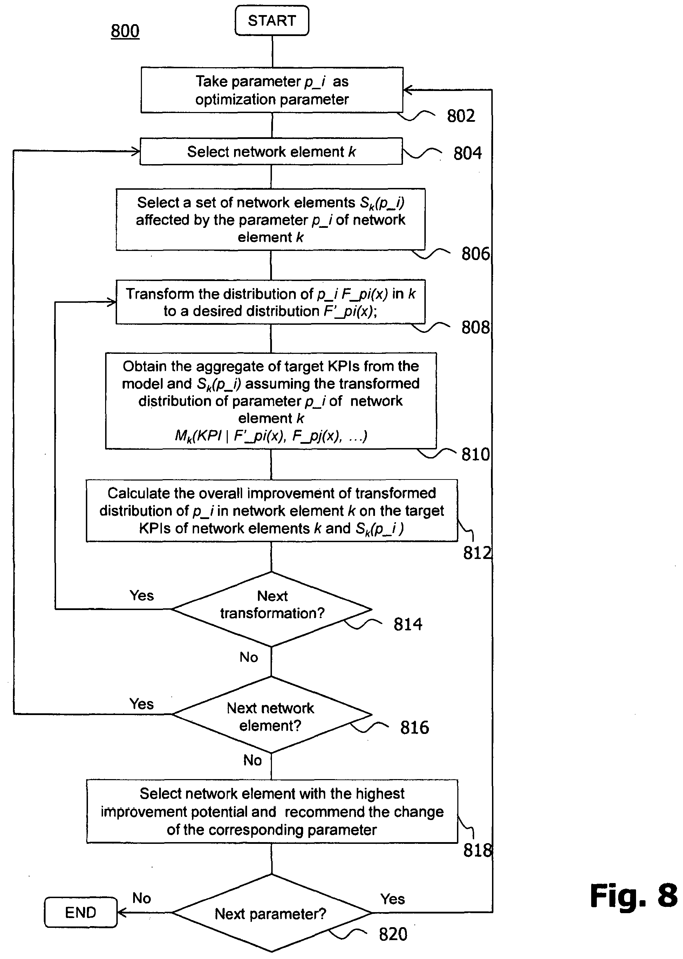

Fig. 8 illustrates a flow chart 800 of an evaluation method that is based on the multivariate performance model generated in accordance with the flow chart 700 of Fig. 7.

Initially, a parameter p_i to be adjusted for optimization purposes in the network 100 is selected in step 802. This parameter p_i belongs to the model parameters for a particular target KPI. It can be, for instance, a NE configuration parameter (e.g., antenna tilt or transmit power of a cell) or a parameter directly connected to a configuration parameter (e.g., the signal strength in terms of Received Signal Reference Power, RSRP, is directly impacted by the antenna tilt of a cell).

In step 804, an individual NE (e.g., NE 1002-1 in Fig. 1, see also description of Fig. 3) is selected as starting point for evaluating the optimization potential in the network 100. In the following, for illustration purposes only, a cell is discussed as an exemplary NE. In other cases, the NE could alternatively be a radio carrier, a Radio Base Station (RBS), Radio Network Controller (RNC), and so on.

In a further step 806, other cells (Sₖ(p_i)) are identified (e.g., NEs 1002-2 and 1002-3, see also the description of Fig. 3) that are potentially impacted by the adjustment of the parameter p_i in the cell selected in step 804. For instance, if RSRP is improved in the selected cell by, e.g., uptilting the antenna of the cell, one may degrade the target KPIs in neighboring cells, since the interference is increased there.

In step 808, the distribution of p_i in the selected cell is transformed to a desired distribution (F_pi(x) → F'_pi(x)) indicative of the parameter adjustment to be evaluated. It will be appreciated that the parameter adjustment could also be modelled otherwise. In principle, the transformation applied in step 808 can be an arbitrary operation on the distribution of p_i. For instance, the transformation can be a shift in the RSRP values by, e.g., 2 dB. In another example, the distribution of p_i can also be replaced with an estimated or measured RSRP distribution after a tilt change. As will be appreciated, the RSPR is just mentioned as an example, and other performance metrics and parameters may be used in other examples.

Next, in step 810 and based on the multivariate performance model, the new (absolute) target KPI values are calculated for the cell selected in step 804 as well as for each of the impacted neighboring cells identified in step 806. Still in step 810, the absolute target KPI values in cell k as well as in the impacted cells Sₖ are aggregated.

If, for example, in the present modelling scenario the distribution of the signal strength (e.g., in terms of RSRP) is changed in cell k, this will automatically cause changes for the interference metric in the neighboring cells Sₖ in the model. In more general terms, if the distribution of p_i is changed in cell k, there is typically no need to explicitly perform any "manual" transformation in the distribution of the impacted parameter p_j in cells Sₖ as the dependence is reflected in the model. If a parameter p_i' is changed in cell k, which has no effect in the neighboring cells, then no parameter distribution change will occur in cells Sₖ.

The proposed modelling approach based on a multivariate performance model thus permits an efficient optimization of cell parameters that have a "multi-cell effect". The reason is that the modelling takes into account how distributions of other (dependent) parameters change in other cells Sₖ upon a parameter change in one particular cell k.

In most cases one and the same multivariate performance model will be used for both the selected cell and its neighboring cells in step 810. In case there are no hidden parameters, the multivariate performance models created for different cells should be identical. Thus, a single "generic" model will typically suffice.

In step 812, the overall effect (e.g., improvement) of the parameter adjustment on the selected and impacted cells is calculated using some utilization function. Such utilization function can be, for instance, the signed difference between the sum of KPI values before and after the transformation of the distribution of parameter p_i. Also other utilization functions can be used, such as the signed difference between the weighted sum of the KPI values before and after the transformation. In such a case, the number of samples, the number of users or other numbers may be used as weights.

Multiple transformations, or parameter adjustments, may be applied on the distribution of p_i if necessary. For instance, the RSRP values of the cell selected in step 804 can be shifted by +2 dB as well as -2 dB. In another example, one can replace the original RSRP distribution of the cell with RSRP distributions measured in case of an antenna uptilt and downtilt in the cell in order to obtain the true effects of the tilt changes. For this reason the method may loop back, via decision step 814, from step 812 to step 808 in case more than one parameter adjustment is to be evaluated per cell.

Via a following decision step 816, the next cell within the network 100 is considered. In other words, steps 806 to 812 may be repeated for each cell of a predefined cell set within the network 100. The method loops back to step 804 until all cells in the set (e.g., in the whole network 100) have been evaluated. Then, the cells can be ordered based on the output of the utilization function (improvement potential) and the optimization procedure can be implemented for the cell having the highest optimization potential (see step 818).

If necessary, the method can continue from step 802 by selecting another parameter (p_j) for optimization. The optimization steps of Fig. 8 may be repeated multiple times on the same parameter as long as the highest improvement potential (e.g., of the highest ranking cell) is above some threshold (i.e., as long as it is technically still reasonable to apply a parameter adjustment). The proposed approach still results in fast convergence, since the multivariate performance model enables multiple transformations on the distribution of a parameter to observe the effect of a change without the actual implementation of the change.

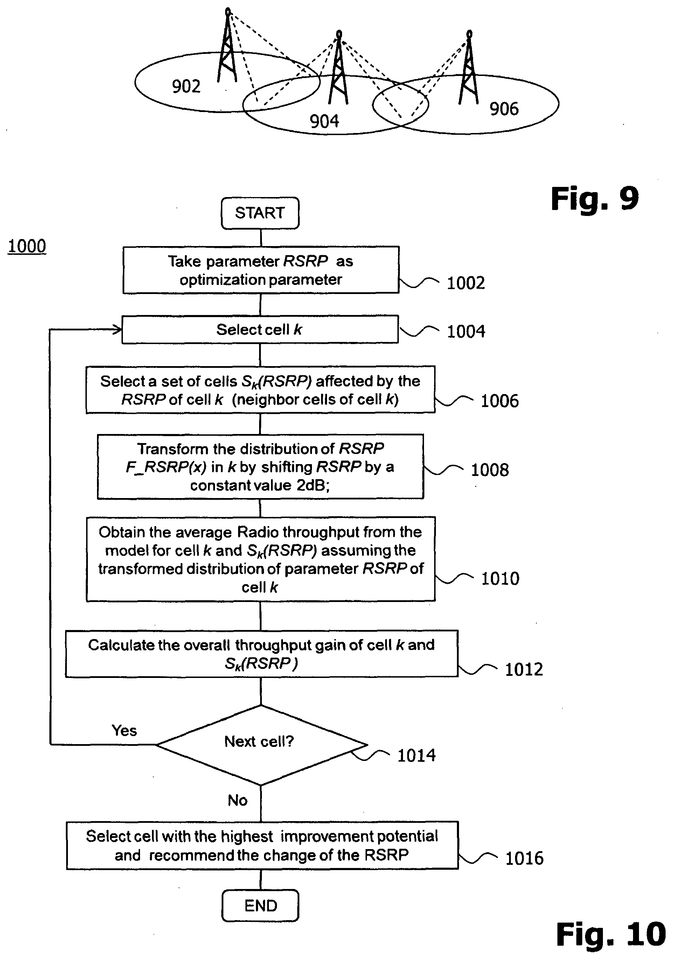

The general model-based approach disclosed herein can, for example, be applied to the optimization of radio coverage and interference. This well-known problem of radio area planning will now be explained with reference to Fig. 9.

Fig. 9 illustrates three partially overlapping radio cells 902, 904, 906. The coverage area of an individual radio cell is determined by the pattern of the electromagnetic power of the cell measured on the field. There are spots with weak radio power (usually far from the base station) and spots with strong radio power (usually close to the base station).

The radio cells 902, 904, 906 are planned so that the coverage areas of the neighboring cells are overlapping to some extent to provide full coverage. If the overlapping area is small then there might be weak spots or coverage holes on the field. However, if the overlapping area is large then the radio signals of the neighboring cells will interfere with each other.

Certain cell parameters (e.g., antenna height, azimuth angle, tilt angle, power) are used to control the coverage areas of the radio cells 902, 904, 906. The optimization of the parameter settings is not trivial due to several reasons. First, the coverage pattern is complicated due to shadings, reflections, hills, and so on. Moreover, there are spots with high occurrence of user terminals while there are empty spots where user terminals do not occur at all. The terrain conditions on the coverage area may also change in time (e.g., new buildings are built). Still further, not all parameters can be set remotely. For example, antenna height, azimuth and, in some cases, tilt can only be adjusted mechanically which makes the process cumbersome, expensive and slow. There is thus a need in the scenario of Fig. 9 to modify the proper parameters in a proper way to get the highest improvement in the network.

The optimization process described with respect to Figs. 3 and 8 can be applied to the above problem. A possible solution is illustrated in the flow chart 1000 of Fig. 10, which is an extract of the flow chart 800 of Fig. 8 tailored to the planning problem illustrated in Fig. 9. Due to the exhaustive description of the flow chart 800 above, steps 1002 to 1016 of the flow chart 1000 of Fig. 10 will not be described in detail. Rather, only the particular parameters used in the flow chart 1000 for optimization of the scenario illustrated in Fig. 9 will be explained in the following.

In the scenario of Fig. 10, the NE 1002 is again the radio cell configured in an RBS in a wireless access network. The KPI is the radio throughput (the "raw" link rate a user terminal can see when scheduled) and the parameter list consists of the signal strength (measured by RSRP) and the interference (measured as the RSRP of the neighboring cells, denoted by nbr_RSRP). The RSRP and nbr_RSRP can be directly influenced by, e.g., the antenna tilt parameter of the cell. Therefore, for illustration purposes, the optimization parameter is assumed to be the RSRP itself. The set of NEs affected by the optimization parameter is the set of neighbor cells. The transformation applied to the distribution of RSRP is shifting RSRP by 2 dB. However, in another example, the distribution of RSRP can also be replaced with an estimated or measured RSRP distribution after a tilt change resulting in more accurate modeling of the impact of a tilt change.

The model is created in the format as shown in Figs. 4 to 7. The transformation made in cell k affects the cell k itself via RSRP and the neighbor cells via nbr_RSRP. The utilization function to aggregate the overall effect of the parameter change is set as the sum of the KPI changes.

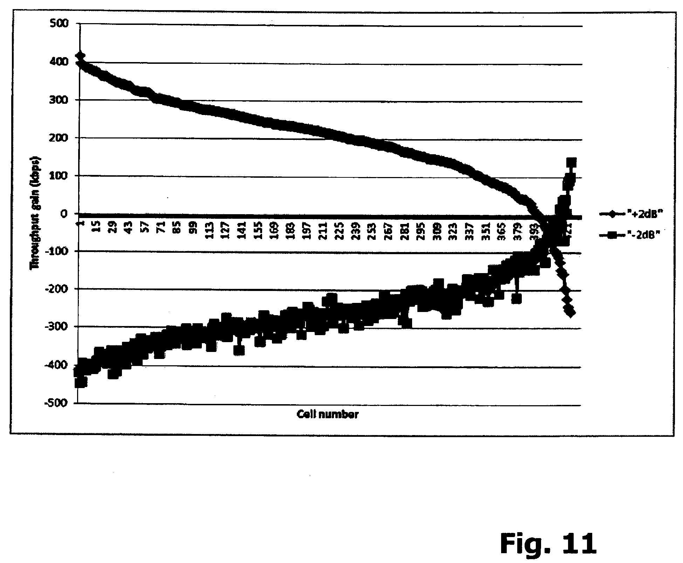

The outcome of the optimization process illustrated in Fig. 10 is a list of cells where the improvement potential after the transformation is highlighted for each cell. Fig. 11 shows the overall gain in the average radio throughput of the cell and the neighbor cells after the transformation (shifting RSRP by +2dB/-2dB). The two curves indicate the throughput gain for each cell after shifting RSRP up and down by 2dB.

Positive gain indicates performance improvement and negative gain indicates performance degradation. In this example shifting the RSRP up by 2dB improves the overall performance for the majority of the cells. However, in some cells it is not recommended to increase RSRP due to increased interference in the neighboring cells. After shifting RSRP in the other direction (down by 2dB), the majority of the cells suffer performance degradation. However, performance improves in some cells due to decreasing interference in the neighboring cells.

With the approach proposed herein, there is no need to assume any (purely) theoretical or analytical modelling of performance, as the underlying model is at least partially created from what is actually acquired in the network 100. One advantage lies in the use of this model for efficient network optimization by taking into account effects on other network elements, as well as for evaluating the overall performance gain of a parameter adjustment. The proposed approach does not have any restriction in terms of the type of the network parameter to be optimized. It also enables to observe the true effect of a parameter adjustment, and it makes the optimization process fast in convergence.

It is believed that the advantages of the technique presented herein will be fully understood from the foregoing description, and it will be apparent that various changes may be made in the form, constructions and arrangement of the exemplary aspects thereof without departing from the scope of the invention or without sacrificing all of its advantageous effects. Because the technique presented herein can be varied in many ways, it will be recognized that the invention should be limited only by the scope of the claims that follow.

## Claims

1. A method of evaluating a parameter adjustment in a mobile communications network (100) using a multivariate performance model, wherein the mobile communications network (100) comprises multiple network entities (1002) and wherein the multivariate performance model is configured to model a dependency of a performance metric for the mobile communications network (100) on at least two parameters, wherein a parameter is selected to be adjusted for a first network entity (1002-1), and a second network entity (1002-2) is potentially affected by the parameter adjustment for the first network entity (1002-1), the method comprising:
determining (316), using the multivariate performance model, a change of the performance metric for the first network entity (1002-1), that results from the parameter adjustment;
determining (318), using the multivariate performance model, a change of the performance metric for the second network entity (1002-2), that results from the parameter adjustment for the first network entity (1002-1); and
evaluating (320) the parameter adjustment based on the performance metric changes for the first network entity (1002-1) and the second network entity (1002-2), wherein
the multivariate performance model is configured to model a dependency of the performance metric on a first parameter and at least one second parameter, and wherein an adjustment of the first parameter for the first network entity (1002-1) potentially results in a change of the at least one second parameter for the second network entity (1002-2).

2. The method of claim 1, wherein
the performance metric change for the first network entity (1002-1) is determined based on the adjustment of the first parameter and wherein the performance metric change for the second network entity (1002-2) is determined based on the resulting change of the at least one second parameter for the network entity (1002-2).

3. The method of claim 1 or 2, wherein
evaluating the parameter adjustment comprises:
aggregating the performance metric changes for the first network entity (1002-1) and the second network entity (1002-2); and
assessing the aggregated performance metric changes.

4. The method of any of the preceding claims, further comprising
determining a new first network entity (1002-2) in the mobile communications network (100) for which the selected parameter is to be adjusted;
determining a new second network entity (1002-1) potentially affected by the parameter adjustment for the new first network entity (1002-2);
determining, using the multivariate performance model, a change of the performance metric for the new first network entity (1002-2), that results from the parameter adjustment;
determining, using the multivariate performance model, a change of the performance metric for the new second network entity (1002-1), that results from the parameter adjustment for the new first network entity (1002-2);
evaluating the parameter adjustment based on the performance metric changes for the new first network entity (1002-2) and the new second network entity (1002-1).

5. The method of claim 4, wherein
the second network entity (1002-2) is determined as the new first network entity.

6. The method of claim 4 or 5, further comprising
identifying the network entity (1002) with the highest optimization potential from the parameter adjustment evaluations.

7. The method of any of the preceding claims, wherein
the multivariate performance model models a dependency of the performance metric on distributions of the at least two parameters, and wherein the parameter adjustment is modelled by changing the distribution of the selected parameter in the multivariate performance model.

8. The method of claim 7, wherein
the parameter adjustment is modelled by replacing the distribution of the selected parameter in the multivariate performance model with a distribution of the selected parameter that has been one of measured and estimated.

9. The method of claim 7, wherein
the parameter adjustment is modelled by shifting the distribution of the selected parameter in the multivariate performance model by a predefined offset value.

10. The method of any of the preceding claims, wherein
the network entities (1002) belong to a radio access domain of the mobile communications network (100).

11. The method of any of the preceding claims, wherein
the multivariate performance model is based on measurements of at least one of the at least two parameters.

12. The method of any of the preceding claims, further comprising
generating the multivariate performance model.

13. The method of claim 12, wherein
generating the multivariate performance model comprises:
receiving performance metric values, first parameter values and second parameter values, wherein a particular performance metric value is associated with the first and second parameter values that were prevailing when the particular performance metric value was acquired, wherein each of the first parameter and the second parameter is categorized in at least two non-overlapping sets of parameter values, and wherein different combinations of a first parameter set value set and a second parameter value set are defined;
identifying groups of performance metric values for which the first and second parameter values match the first and second parameter value sets of an individual combination; and
generating the multivariate performance model from the identified groups of performance metric values.

14. A computer program product comprising program code portions for performing the steps of any of claims 1 to 13 when the computer program product is executed on at least one computing device.

15. The computer program product of claim 14, stored on a computer-readable recording medium.

16. A device (1001) for evaluating a parameter adjustment in a mobile communications network (100) using a multivariate performance model, wherein the mobile communications network (100) comprises multiple network entities (1002) and wherein the multivariate performance model is configured to model a dependency of a performance metric for the mobile communications network (100) on at least two parameters, wherein a parameter is selected to be adjusted for a first network entity (1002-1), and a second network entity (1002-2) is potentially affected by the parameter adjustment for the first network entity (1002-1), the device (1001) being configured to:
determine (2027), using the multivariate performance model, a change of the performance metric for the first network entity (1002-1), that results from the parameter adjustment;
determine (2027), using the multivariate performance model, a change of the performance metric for the second network entity (1002-2) that results from the parameter adjustment for the first network entity (1002-1); and
evaluate (2028) the parameter adjustment based on the performance metric changes for the first network entity (1002-1) and the second network entity (1002-2), wherein
the multivariate performance model is configured to model a dependency of the performance metric on a first parameter and at least one second parameter, and wherein an adjustment of the first parameter for the first network entity (1002-1) potentially results in a change of the at least one second parameter for the second network entity (1002-2).

17. A network management system (1001) comprising the device of claim 16.

## Patentansprüche

1. Verfahren zur Auswertung einer Parametereinstellung in einem mobilen Kommunikationsnetz (100) unter Verwendung eines multivariaten Leistungsmodells, wobei das mobile Kommunikationsnetz (100) mehrere Netzinstanzen (1002) umfasst, und wobei das multivariate Leistungsmodell zum Modellieren einer Abhängigkeit einer Leistungsmetrik für das mobile Kommunikationsnetz (100) von mindestens zwei Parametern konfiguriert ist, wobei ein Parameter so ausgewählt wird, dass er für eine erste Netzinstanz (1002-1) eingestellt wird, und eine zweite Netzinstanz (1002-2) potenziell von der Parametereinstellung für die erste Netzinstanz (1002-1) beeinflusst wird, wobei das Verfahren umfasst:
Bestimmen (316) unter Verwendung des multivariaten Leistungsmodells einer Änderung der Leistungsmetrik für die erste Netzinstanz (1002-1), die aus der Parametereinstellung resultiert;
Bestimmen (318) unter Verwendung des multivariaten Leistungsmodells einer Änderung der Leistungsmetrik für die zweite Netzinstanz (1002-2), die aus der Parametereinstellung für die erste Netzinstanz (1002-1) resultiert;
Auswerten (320) der Parametereinstellung basierend auf den Leistungsmetrikänderungen für die erste Netzinstanz (1002-1) und die zweite Netzinstanz (1002-2), wobei
das multivariate Leistungsmodell zum Modellieren einer Abhängigkeit der Leistungsmetrik von einem ersten Parameter und mindestens einem zweiten Parameter konfiguriert ist, und wobei eine Einstellung des ersten Parameters für die erste Netzinstanz (1002-1) potenziell zu einer Änderung des mindestens einen zweiten Parameters für die zweite Netzinstanz (1002-2) führt.

2. Verfahren nach Anspruch 1, wobei
die Leistungsmetrikänderung für die erste Netzinstanz (1002-1) basierend auf der Einstellung des ersten Parameters bestimmt wird, und wobei die Leistungsmetrikänderung für die zweite Netzinstanz (1002-2) basierend auf der resultierenden Änderung des mindestens einen zweiten Parameters für die Netzinstanz (1002-2) bestimmt wird.

3. Verfahren nach Anspruch 1 oder 2, wobei das Auswerten der Parametereinstellung umfasst:
Aggregieren der Leistungsmetrikänderungen für die erste Netzinstanz (1002-1) und die zweite Netzinstanz (1002-2); und
Beurteilen der aggregierten Leistungsmetrikänderungen.

4. Verfahren nach einem der vorhergehenden Ansprüche, ferner umfassend:
Bestimmen einer neuen ersten Netzinstanz (1002-2) im mobilen Kommunikationsnetz (100), für welche der ausgewählte Parameter eingestellt werden soll;
Bestimmen einer neuen zweiten Netzinstanz (1002-1), die potenziell von der Parametereinstellung für die neue erste Netzinstanz (1002-2) beeinflusst wird;
Bestimmen unter Verwendung des multivariaten Leistungsmodells einer Änderung der Leistungsmetrik für die neue erste Netzinstanz (1002-2), die aus der Parametereinstellung resultiert;
Bestimmen unter Verwendung des multivariaten Leistungsmodells einer Änderung der Leistungsmetrik für die neue zweite Netzinstanz (1002-1), die aus der Parametereinstellung für die neue erste Netzinstanz (1002-2) resultiert;
Auswerten der Parametereinstellung basierend auf den Leistungsmetrikänderungen für die neue erste Netzinstanz (1002-2) und die neue zweite Netzinstanz (1002-1).

5. Verfahren nach Anspruch 4, wobei
die zweite Netzinstanz (1002-2) als die neue erste Netzinstanz bestimmt wird.

6. Verfahren nach Anspruch 4 oder 5, ferner umfassend:
Identifizieren der Netzinstanz (1002) mit dem höchsten Optimierungspotenzial aus den Parametereinstellungsauswertungen.

7. Verfahren nach einem der vorhergehenden Ansprüche, wobei
das multivariate Leistungsmodell eine Abhängigkeit der Leistungsmetrik von Verteilungen der mindestens zwei Parameter modelliert, und wobei die Parametereinstellung durch Ändern der Verteilung des ausgewählten Parameters im multivariaten Leistungsmodell modelliert wird.

8. Verfahren nach Anspruch 7, wobei
die Parametereinstellung durch Ersetzen der Verteilung des ausgewählten Parameters im multivariaten Leistungsmodell durch eine Verteilung des ausgewählten Parameters modelliert wird, der eines von gemessen und geschätzt wurde.

9. Verfahren nach Anspruch 7, wobei
die Parametereinstellung durch Verschieben der Verteilung des ausgewählten Parameters im multivariaten Leistungsmodell um einen vordefinierten Offsetwert modelliert wird.

10. Verfahren nach einem der vorhergehenden Ansprüche, wobei
die Netzinstanzen (1002) zu einer Funkanschlussdomäne des mobilen Kommunikationsnetzes (100) gehören.

11. Verfahren nach einem der vorhergehenden Ansprüche, wobei
das multivariate Leistungsmodell auf Messungen mindestens eines der mindestens zwei Parameter basiert.

12. Verfahren nach einem der vorhergehenden Ansprüche, ferner umfassend:
Erzeugen des multivariaten Leistungsmodells.

13. Verfahren nach Anspruch 12, wobei
Erzeugen des multivariaten Leistungsmodells umfasst:
Empfangen von Leistungsmetrikwerten, ersten Parameterwerten und zweiten Parameterwertem, wobei ein bestimmter Leistungsmetrikwert mit den ersten und zweiten Parameterwerten assoziiert wird, die vorherrschten, als der bestimmte Leistungsmetrikwert erfasst wurde, wobei jeder von dem ersten Parameter und dem zweiten Parameter in mindestens zwei überlappende Mengen von Parameterwerten eingeordnet wird, und wobei verschiedene Kombinationen einer ersten Parameterwertmenge und einer zweiten Parameterwertmenge definiert werden;
Identifizieren von Gruppen von Leistungsmetrikwerten, für welche die ersten und zweiten Parameterwerte den ersten und zweiten Parameterwertmengen einer einzelnen Kombination entsprechen; und
Erzeugen des multivariaten Leistungsmodells aus den identifizierten Gruppen von Leistungsmetrikwerten.

14. Computerprogrammprodukt, umfassend Programmcodeabschnitte zum Ausführen der Schritte nach einem der Ansprüche 1 bis 13, wenn das Computerprogrammprodukt auf mindestens einem Computergerät ausgeführt wird.

15. Computerprogrammprodukt nach Anspruch 14, gespeichert auf einem computerlesbaren Aufzeichnungsmedium.

16. Vorrichtung (1001) zum Auswerten einer Parametereinstellung in einem mobilen Kommunikationsnetz (100) unter Verwendung eines multivariaten Leistungsmodells, wobei das mobile Kommunikationsnetz (100) mehrere Netzinstanzen (1002) umfasst, und wobei das multivariate Leistungsmodell zum Modellieren einer Abhängigkeit einer Leistungsmetrik für das mobile Kommunikationsnetz (100) von mindestens zwei Parametern konfiguriert ist, wobei ein Parameter so ausgewählt wird, dass er für eine erste Netzinstanz (1002-1) eingestellt wird, und eine zweite Netzinstanz (1002-2) potenziell von der Parametereinstellung für die erste Netzinstanz (1002-1) beeinflusst wird, wobei die Vorrichtung (1001) konfiguriert ist zum:
Bestimmen (2027) unter Verwendung des multivariaten Leistungsmodells einer Änderung der Leistungsmetrik für die erste Netzinstanz (1002-1), die aus der Parametereinstellung resultiert;
Bestimmen (2027) unter Verwendung des multivariaten Leistungsmodells einer Änderung der Leistungsmetrik für die zweite Netzinstanz (1002-2), die aus der Parametereinstellung für die erste Netzinstanz (1002-1) resultiert;
Auswerten (2028) der Parametereinstellung basierend auf den Leistungsmetrikänderungen für die erste Netzinstanz (1002-1) und die zweite Netzinstanz (1002-2), wobei
das multivariate Leistungsmodell zum Modellieren einer Abhängigkeit der Leistungsmetrik von einem ersten Parameter und mindestens einem zweiten Parameter konfiguriert ist, und wobei eine Einstellung des ersten Parameters für die erste Netzinstanz (1002-1) potenziell zu einer Änderung des mindestens einen zweiten Parameters für die zweite Netzinstanz (1002-2) führt.

17. Netzverwaltungssystem (1001), umfassend die Vorrichtung nach Anspruch 16.

## Revendications

1. Procédé d'évaluation d'un ajustement de paramètre dans un réseau de communication mobile (100) en utilisant un modèle de performances multivarié, dans lequel le réseau de communication mobile (100) comprend de multiples entités de réseau (1002) et dans lequel le modèle de performances multivarié est configuré pour modéliser une dépendance d'une métrique de performances pour le réseau de communication mobile (100) à au moins deux paramètres, dans lequel un paramètre est sélectionné pour être ajusté pour une première entité de réseau (1002-1), et une deuxième entité de réseau (1002-2) est potentiellement affectée par l'ajustement de paramètre pour la première entité de réseau (1002-1), le procédé comprenant :
la détermination (316), en utilisant le modèle de performances multivarié, d'un changement de la métrique de performances pour la première entité de réseau (1002-1), qui découle de l'ajustement de paramètre ;
la détermination (318), en utilisant le modèle de performances multivarié, d'un changement de la métrique de performances pour la deuxième entité de réseau (1002-2), qui découle de l'ajustement de paramètre pour la première entité de réseau (1002-1) ; et
l'évaluation (320) de l'ajustement de paramètre sur la base des changements de métrique de performances pour la première entité de réseau (1002-1) et la deuxième entité de réseau (1002-2), dans lequel
le modèle de performances multivarié est configuré pour modéliser une dépendance de la métrique de performances à un premier paramètre et à au moins un deuxième paramètre, et dans lequel un ajustement du premier paramètre pour la première entité de réseau (1002-1) engendre potentiellement un changement de l'au moins un deuxième paramètre pour la deuxième entité de réseau (1002-2).

2. Procédé selon la revendication 1, dans lequel
le changement de métrique de performances pour la première entité de réseau (1002-1) est déterminé sur la base de l'ajustement du premier paramètre et dans lequel le changement de métrique de performances pour la deuxième entité de réseau (1002-2) est déterminé sur la base du changement résultant de l'au moins un deuxième paramètre pour l'entité de réseau (1002-2).

3. Procédé selon la revendication 1 ou 2, dans lequel l'évaluation de l'ajustement de paramètre comprend :
l'agrégation des changements de métrique de performances pour la première entité de réseau (1002-1) et la deuxième entité de réseau (1002-2) ; et
l'évaluation des changements de métrique de performances agrégés.

4. Procédé selon l'une quelconque des revendications précédentes, comprenant en outre :
la détermination d'une nouvelle première entité de réseau (1002-2) dans le réseau de communication mobile (100) pour laquelle le paramètre sélectionné doit être ajusté ;
la détermination d'une nouvelle deuxième entité de réseau (1002-1) potentiellement affectée par l'ajustement de paramètre pour la nouvelle première entité de réseau (1002-2) ;
la détermination, en utilisant le modèle de performances multivarié, d'un changement de la métrique de performances pour la nouvelle première entité de réseau (1002-2) découlant de l'ajustement de paramètre ;
la détermination, en utilisant le modèle de performances multivarié, d'un changement de la métrique de performances pour la nouvelle deuxième entité de réseau (1002-1) découlant de l'ajustement de paramètre pour la nouvelle première entité de réseau (1002-2) ;
l'évaluation de l'ajustement de paramètre sur la base des changements de métrique de performances pour la nouvelle première entité de réseau (1002-2) et la nouvelle deuxième entité de réseau (1002-1).

5. Procédé selon la revendication 4, dans lequel
la deuxième entité de réseau (1002-2) est déterminée en tant que la nouvelle première entité de réseau.

6. Procédé selon la revendication 4 ou 5, comprenant en outre
l'identification de l'entité de réseau (1002) avec le plus grand potentiel d'optimisation à partir des évaluations d'ajustement de paramètre.

7. Procédé selon l'une quelconque des revendications précédentes, dans lequel
le modèle de performances multivarié modélise une dépendance de la métrique de performances à des distributions des au moins deux paramètres, et dans lequel l'ajustement de paramètres est modélisé en changeant la distribution du paramètre sélectionné dans le modèle de performances multivarié.

8. Procédé selon la revendication 7, dans lequel
l'ajustement de paramètre est modélisé en remplaçant la distribution du paramètre sélectionné dans le modèle de performances multivarié par une distribution du paramètre sélectionné qui a été mesuré ou estimé.

9. Procédé selon la revendication 7, dans lequel
l'ajustement de paramètre est modélisé en déplaçant la distribution du paramètre sélectionné dans le modèle de performances multivarié d'une valeur de décalage prédéfinie.

10. Procédé selon l'une quelconque des revendications précédentes, dans lequel
les entités de réseau (1002) appartiennent à un domaine d'accès radio du réseau de communication mobile (100).

11. Procédé selon l'une quelconque des revendications précédentes, dans lequel
le modèle de performances multivarié est basé sur des mesures d'au moins l'un des au moins deux paramètres.

12. Procédé selon l'une quelconque des revendications précédentes, comprenant en outre
la génération du modèle de performances multivarié.

13. Procédé selon la revendication 12, dans lequel
la génération du modèle de performances multivarié comprend :
la réception de valeurs de métrique de performances, de valeurs de premier paramètre et de valeurs de deuxième paramètre, dans lequel une valeur de métrique de performances particulière est associée aux valeurs de premier et deuxième paramètres qui prévalaient lors de l'acquisition de la valeur de métrique de performances particulière, dans lequel chacun du premier paramètre et du deuxième paramètre est catégorisé dans au moins deux ensembles de valeurs de paramètre qui ne se chevauchent pas, et dans lequel différentes combinaisons d'un ensemble de valeurs de premier paramètre et d'un ensemble de valeurs de deuxième paramètre sont définies ;
l'identification de groupes de valeurs de métrique de performances pour lesquelles les valeurs de premier paramètre et de deuxième paramètre correspondent aux ensembles de valeurs de premier paramètre et de deuxième paramètre d'une combinaison individuelle ; et
la génération du modèle de performances multivarié à partir des groupes identifiés de valeurs de métrique de performances.

14. Produit de programme informatique comprenant des portions de code de programme pour effectuer les étapes selon l'une quelconque des revendications 1 à 13 lorsque le produit de programme informatique est exécuté sur au moins un dispositif informatique.

15. Produit de programme informatique selon la revendication 14, mémorisé sur un support d'enregistrement lisible par ordinateur.

16. Dispositif (1001) d'évaluation d'un ajustement de paramètre dans un réseau de communication mobile (100) en utilisant un modèle de performances multivarié, dans lequel le réseau de communication mobile (100) comprend de multiples entités de réseau (1002) et dans lequel le modèle de performances multivarié est configuré pour modéliser une dépendance d'une métrique de performances pour le réseau de communication mobile (100) à au moins deux paramètres, dans lequel un paramètre est sélectionné pour être ajusté pour une première entité de réseau (1002-1), et une deuxième entité de réseau (1002-2) est potentiellement affectée par l'ajustement de paramètre pour la première entité de réseau (1002-1), le dispositif (1001) étant configuré pour effectuer :
la détermination (2027), en utilisant le modèle de performances multivarié, d'un changement de la métrique de performances pour la première entité de réseau (1002-1), qui découle de l'ajustement de paramètre ;
la détermination (2027), en utilisant le modèle de performances multivarié, d'un changement de la métrique de performances pour la deuxième entité de réseau (1002-2), qui découle de l'ajustement de paramètre pour la première entité de réseau (1002-1) ; et
l'évaluation (2028) de l'ajustement de paramètre sur la base des changements de métrique de performances pour la première entité de réseau (1002-1) et la deuxième entité de réseau (1002-2), dans lequel
le modèle de performances multivarié est configuré pour modéliser une dépendance de la métrique de performances à un premier paramètre et à au moins un deuxième paramètre, et dans lequel un ajustement du premier paramètre pour la première entité de réseau (1002-1) engendre potentiellement un changement de l'au moins un deuxième paramètre pour la deuxième entité de réseau (1002-2).

17. Système de gestion de réseau (1001) comprenant le dispositif selon la revendication 16.
